**Europäisches Patentamt**

**European Patent Office**

**Office européen des brevets**

(19)

(11) Publication number: **0 462 921 B1**

## EUROPEAN PATENT SPECIFICATION

(45) Date of publication of patent specification: **14.12.94**  (51) Int. Cl.5: **F23L 15/02**, F23J 15/00

(21) Application number: **91610052.2**

(22) Date of filing: **14.06.91**

(54) **Method and apparatus for optimizing the efficiency and minimizing the formation of NOx in combustion plants.**

(30) Priority: **18.06.90 DK 1486/90**

(43) Date of publication of application:
**27.12.91 Bulletin 91/52**

(45) Publication of the grant of the patent:
**14.12.94 Bulletin 94/50**

(84) Designated Contracting States:
**AT BE CH DE ES FR GB GR IT LI LU NL SE**

(56) References cited:
**EP-A- 0 148 741       EP-A- 0 305 351**
**WO-A-90/01137        DE-C- 3 402 063**
**FR-A- 2 508 616       GB-A- 2 031 572**

**PATENT ABSTRACTS OF JAPAN vol. 10, no. 320 (M-530)(2376) 30 October 1986 & JP-A-61 128 021 ( NOBUO ISHIMOTO ) 16 June 1986**

(73) Proprietor: **AIR FRÖHLICH ApS**
**Usserod Kongevej 33**
**DK-2970 Horsholm (DK)**

(72) Inventor: **Bjaerg, Bent**
**30, Nordskraenten**
**DK-2980 Kokkedal (DK)**
Inventor: **Schmidt, Jorgen Arthur**
**12, Helgasvej**
**DK-2970 Horsholm (DK)**

(74) Representative: **Lund, Preben et al**
**Larsen & Birkeholm A/S**
**Skagensgade 64**
**P.O. Box 200**
**DK-2630 Taastrup (DK)**

EP 0 462 921 B1

**Description**

The invention relates to a method of the kind disclosed in the preamble to claim 1, which can be exercised in connection with a plant, e.g. of the kind presented in claim 5.

It is commonly-known to improve the efficiency of a combustion plant, e.g. a remote heating plant or a boiler plant in a normal central heating station, by bringing a so-called economizer in connection with the boiler, in that a part of the thermal energy in the flue gases is hereby regained. An economizer is a kind of heat exchanger which is used to transfer a part of the thermal energy in the flue gas to the make-up or return water which is fed to the boiler. With certain economizer constructions, a condensation of part of the flue gas occurs. This gives rise to a condensate which is a mixture of water, sulphur, sulphuric acid, salts, soot particles etc., all depending on the kind of fuel with which the boiler is fired. The condensate is normally to be considered as waste and is led away for disposal. In certain cases, however, the thermal energy existing in the condensate is utilized in a heat exchanger. The condensate is often aggressive, and troublesome and expensive arrangements have to be made in connection with its neutralization and disposal.

It is also commonly-known to reduce the amount of NOx in the flue gas from gas or oil-burners by the injection of moisture at the flame root, and also by the use of various additives in solid-fuel burners. It is also possible to re-circulate a part of the oxygen-deficient flue gas to the combustion chamber.

From EP-A-0305351 is known a method for the optimization of the efficiency in a combustion plant with a boiler with econimizer and a flue-gas system, and for the minimization of the formation of NOx in the flue gas from the plant. The heat content in the flue gas is used for pre-heating the combustion air for the boiler by enthalpic transfer, i.e. simultaneous transfer of thermal energy and water vapour from the flue gas to the combustion air. The flue gas is transferred from the boiler via a heat exchanger, i.e. the economizer, directly to the enthalpic heat exchanger, in which the gases are further cooled, so that water vapour is condensed on the flue gas side of the heat exchanger and re-evaporized on the air combustion side thereof. This results in reduced thermal efficiency and increases the possibility of the formation of water droplets in the combustion air.

It is commonly-known to use a rotating, ceramic heat exchanger for the transfer of thermal energy and water vapour from one airflow to another in a ventilation plant, cf. e.g. what is known from GB-A-2,092,732. It is also known to use a rotating, ceramic heat exchanger for a combustion plant with very high flue-gas temperature, where an ordinary heat exchanger cannot be used, and for the heating of the combustion air in order to increase the efficiency of a combustion plant, cf. e.g. what is known from DE-A-2,944,818.

The heavily-moisturized primary air fed to the burner results in lower flame-root temperatures, i.e. lower NOx formation. Since all of the water vapour in the combustion air finishes up in the flue gas, this assumes other characteristics as compared to known methods and plants. For the same fuel consumption, the flue gas assumes a greater specific heat, i.e. greater capacity, and the dew point temperature is raised so that more heat energy can be extracted (recovered) in both the economizer and the subsequent enthalpic heat exchanger(s). For the reason that the flame-root temperature is reduced, at the same time there is also achieved an increase in the energy utilization of the fuel and a lower formation of NOx.

It is the object of the invention to optimize the efficiency in a combustion plant with enthalpic heat transfer from the flue gas to the combustion air, without hereby giving rise to other disadvantages.

By proceeding as characterized in claim 1, e.g. during the use of a plant as characterized in claim 5, the usually water-vapour saturated flue gas is heated so that it is "dried", hereby avoiding condensation in the enthalpy heat exchanger, and optimum heat transfer is achieved. All of the energy which in this manner is further added to the flue gas will be re-used, and thus it is not lost or wasted but contributes towards providing optimum transfer of the water vapour to the combustion air without reducing the thermal efficiency. On the contrary, it has been established that the efficiency is increased and, which is very important, a plant is achieved which is relatively easy to control and adjust. Practical experiments have proved that heating plants with condensation in the rotating heat exchanger are difficult to control and therefore often have a low efficiency. Plants with condensation moreover often give rise to problems relating to excess condensate, which must be removed.

By proceeding as characterized in claim 2, e.g. during the use of a plant as characterized in claim 6, condensation in the chimney can be completely avoided. With some plants this is not necessary, but is frequently a demand in order to keep the chimney completely dry and to avoid the emission of steam from the chimney pipe, which could be looked upon as pollution by the local inhabitants. The energy possibly added is a loss, but must naturally be seen in relation to the longer lifetime of the chimney.

By proceeding as characterized in claim 3, e.g. during the use of a plant as characterized in claim 7, a full safeguard is achieved against the formation of droplets in the combustion air. Drops of water in the combustion air give rise to knocking, which is highly undesirable. The possible addition of thermal energy is not lost, but combines completely with the combustion air and is thus fully re-used.

Finally, one can proceed as characterized in claim 4, e.g. during the use of a plant as characterized in claim 8, in that this will result in an optimized content of water vapour in the combustion air, and a reduced amount of condensate or possibly no condensate whatsoever.

The invention will now be described in more detail with reference to the drawing, in that

fig. 1    shows a principle diagram of the method according to the invention,

fig. 2    shows an example of an enthalpy heat exchanger for use in connection with the invention,

fig. 3    shows a first embodiment of a plant according to the invention, and

fig. 4    shows a second embodiment of a plant according to the invention.

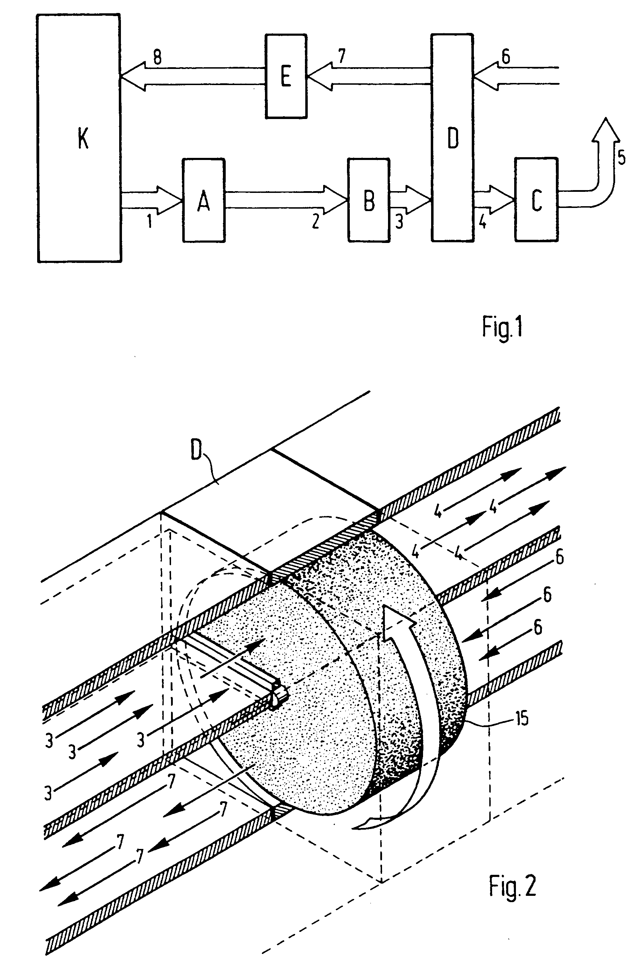

In fig. 1 is seen a principle diagram in the form of a flow diagram showing the method used in the plant according to the invention. A boiler K, e.g. a gas-fired or oil-fired boiler, emits flue gas 1 which in a normal and commonly-known way passes an economizer A in which a part of the thermal energy is recovered in a traditional manner. The flue gas is led from the economizer A to an enthalpy heat exchanger D which is later explained in more detail in connection with fig. 2. In the flue-gas pipe 2,3 is placed an intermediate heater B which, for example, can be a water/air or air/air heat exchanger. The temperature of the flue gas is thus increased slightly so that no condensation will be able to take place in the heat exchanger D. Any possible condensation in the heat exchanger D will reduce its efficiency. In the heat exchanger D, the main part of the thermal energy in the flue gas is removed and also the main part of its content of water vapour, so that hereafter the flue gas can be led directly to a chimney 5. In the flue-gas pipe 4,5 it is possible to place an after-heater C, which can be an air/air or a water/air heat exchanger, so that the temperature of the flue gas can be raised so much that no condensation can take place in the chimney 5.

If the boiler K is not an oil-fired boiler, a filter can be inserted between the economizer A and the heat exchanger D to filter out possible soot particles or the like before they reach the heat exchanger, and thus the blocking of the heat exchanger by possible soot particles in the flue gas is avoided.

The combustion air, e.g. in the form of ordinary outside air 6, is led via the heat exchanger D to the burner in the boiler K. In the heat exchanger D, the air is heated and moisturized, and thus the combustion air which is finally fed to the burner in the boiler is very rich in energy. Because of the high content of moisture in the combustion air, the temperature of the flame root will be reduced, and thus the production of NOx is considerably reduced. The large addition of moisture will also give rise to a somewhat greater specific energy and mass flow than in normal heating plants, which results in a greater degree of utilization of the boiler and, above all, a considerably higher dew point. In order to avoid pinking effects at the burner in the boiler, a safety-heater E can be introduced with the object of ensuring that the combustion air does not contain droplets of water. The thermal energy which is possibly used in the safety-heater is transferred completely to the combustion air and is totally recovered. The reference figure 8 indicates the final combustion air which is led to the burner in the boiler K. The safety-heater E can be a water/air or air/air heat exchanger.

If water/air heat exchangers are used, the heating apparatus B, C and E are supplied with energy from boiler water or water from the economizer, or with flue gas if air/air heat exchangers are used.

In fig. 2 is seen a rotary enthalpy heat exchanger comprising a motor-driven, rotating heat-exchanger mass in the form of a rotor 15. This heat-exchanger mass can be of ceramic material or another material with similar effect, so that during rotation it absorbs both thermal energy and water vapour from the flue gas 3, so that the outgoing flue gas 4 is of a considerably lower temperature and has a considerably lower content of water than the incoming flue gas 3.

The input air 6 passes the heat exchanger's rotary mass and leaves this as combustion air 7 which is rich in energy, both in the form of an increased temperature and in the form of increased water-vapour content.

The whole of the air/flue-gas circulation between the boiler and the heat exchanger D thus takes place with a considerably higher content of water vapour, which is the main reason for the increased possibility of being able to achieve maximum conditions, both with regard to energy utilization and reduction of NOx in the chimney discharge and optimized operational conditions for the plant.

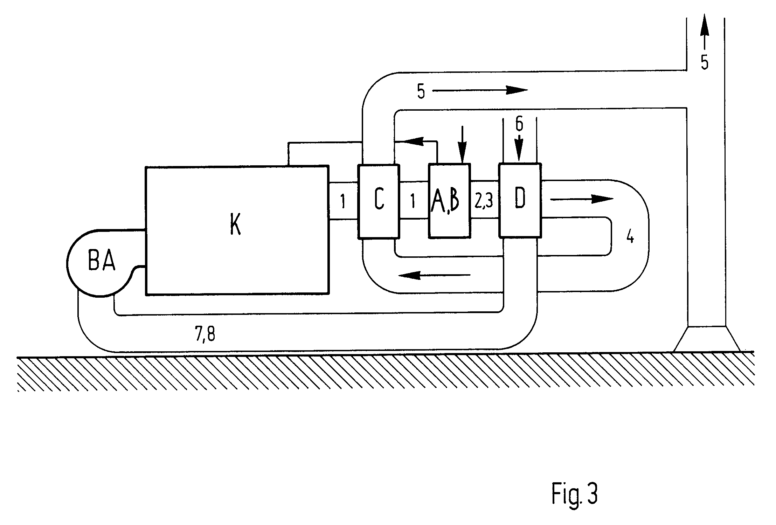

In fig. 3, in which the same reference figures are used as in fig. 1, is seen a plant which is configured so that the heat recovery is effected by the method according to the invention. A gas-fired boiler K with a gas-burner aggregate BA is coupled to an economizer A and an intermediate heater B from which flue gas is led to an enthalpy heat exchanger D. Before the flue gas is led to the chimney 5, it is heated in the heat exchanger C, thus ensuring that the chimney remains dry right up to the chimney-top. The heat exchanger C is an air/air heat exchanger which is supplied with energy directly from the flue gas. The combustion air 6,7,8 is fed to the gas burner BA in the form of heated air with a high content of moisture, so that the burner BA has a lower flame-root temperature and herewith lower NOx formation.

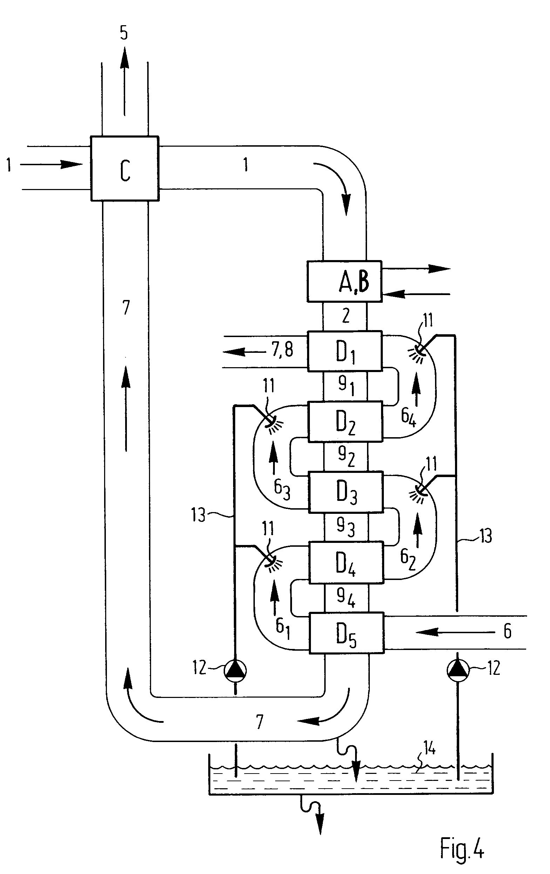

In fig. 4 is seen a second embodiment of a plant according to the invention, namely a plant in which a number of re-generative heat exchangers $D_1,D_2,D_3,D_4$ and $D_5$ are used.

The flue gas 1 is led via the economizer A and the intermediate heater B to the series-connected regenerative heat exchangers $D_1$ - $D_5$, which are coupled together by channels $9_1$ - $9_4$, and out in a flue-gas channel 7, and via an air/air heat exchanger C to the chimney 5. The heat exchanger C is supplied with energy direct from the flue gas. The condensate from the flue gas is collected in a vessel 14, from which via pipes 13 and pumps 12 it is sprayed into the combustion air through jets 11, the result being a combustion air 7,8 with a very high content of water vapour. All of the heat exchangers are coupled together via channels $6_1$ -$6_4$. The high content of water vapour in the combustion air returns via the flue gas 1 and contributes towards a very large formation of condensate, hereby enabling an extreme transfer to be achieved of heat from the flue gas to the combustion air, the result being a recovery of heat which is almost complete, and thus the flue gas to the chimney 5 is close to normal outside temperature. Seen on the whole, the amount of flue gas will be larger with the increase of water vapour, so that the increased specific energy of the flue gas will mean both a greater boiler utilization and a greater recovery of heat in the heat recovery part. Consequently, the flue gas which comes out of the boiler and is led to the economizer A has a higher dew point, which means that the economizer has a considerably higher performance.

**EXAMPLE**

A 2.0 MW gas boiler in a heating plant with a boiler efficiency of 0.92% is loaded 100%, i.e. the plant is loaded with 2.0 MW emitted power.

The boiler plant has the following input:
- 120.00 °C flue gas before ECO (A)
- 2579.87 kg/h dry flue gas
- 52.00 °C after ECO (A)
- 97.00 g/kg after ECO (A)
- 90.00 °C after preheater (B)
- 2792.80 kg/h dry air (primary air)
- 4.00 °C air before D
- 4.00 g/kg before D
- 2000.00 kW emitted power
- 0.92% boiler efficiency
- 11815.00 kcal/kg lower calorific value
- 13120.00 kcal/kg upper calorific value
- 158.24 kg/h stoked amount
- 1.06 air surplus
- 11.33% $CO_2$
- 12.21 $Nm^3$/kg dry flue gas
- 16.30 kg/kg dry flue gas
- 17.65 kg/kg dry primary air
- 100.00% load

The flue gas from the boiler is fed via an economizer (A) to a flue-gas plant, as explained in connection with fig. 1, under three different methods of working, i.e. working methods 1,2 and 3. The same boiler and gas-burner are used in all methods of working.

Working method 1:

The enthalpy heat exchanger (D) is decoupled (removed) and a slight re-heating (B) is carried out before the flue gas is led to the chimney, this re-heating being just enough to prevent condensation in the chimney.

The following is the output obtained from the heating plant:

| Pos. | °C | g/kg | kJ/kg | kg/h dry | kg/h wet |
|---|---|---|---|---|---|
| 1 | 120.00 | 132.66 | 479.97 | 2579.87 | 2922.11 |
| 2 | 52.00 | 97.00 | 302.02 | 2579.87 | 2830.11 |
| 3 | 90.00 | 97.00 | 347.49 | 2579.87 | 2830.11 |
| 4 | 90.00 | 97.00 | 347.49 | 2579.87 | 2830.11 |
| 5 | 90.00 | 97.00 | 347.49 | 2579.87 | 2830.11 |
| 6 | 4.00 | 4.00 | 13.94 | 2792.80 | 2803.97 |
| 7 | 4.00 | 4.00 | 13.94 | 2792.80 | 2803.97 |
| 8 | 4.00 | 4.00 | 13.94 | 2792.80 | 2803.97 |

| Element No. | Capacity kW | Condensate kg/h | Water in °C | Water out °C |
|---|---|---|---|---|
| A | 127.40 | 91.99 | 45.00 | 48.70 |
| B | 32.56 | 0.00 | 95.00 | 85.00 |
| C | 0.00 | 0.00 | 95.00 | 85.00 |
| D | 0.00 | 0.00 | 0.00 | 0.00 |
| E | 0.00 | 0.00 | 95.00 | 85.00 |

System efficiency = 99.60

The position numbers and element numbers refer to fig. 1.

Working method 2:

The enthalpy heat exchanger (D) is coupled (inserted) and the same re-heating after the economizer is carried out as in working method 1.

The following is the output obtained from the heating plant:

| Pos. | °C | g/kg | kJ/kg | kg/h dry | kg/h wet |
|---|---|---|---|---|---|
| 1 | 120.00 | 203.13 | 670.84 | 2579.87 | 3103.92 |
| 2 | 52.00 | 97.00 | 302.02 | 2579.87 | 2830.11 |
| 3 | 90.00 | 97.00 | 347.49 | 2579.87 | 2830.11 |
| 4 | 27.56 | 26.53 | 94.74 | 2579.87 | 2648.30 |
| 5 | 27.56 | 26.53 | 94.74 | 2579.87 | 2648.30 |
| 6 | 4.00 | 4.00 | 13.94 | 2792.80 | 2803.97 |
| 7 | 67.10 | 69.10 | 247.43 | 2792.80 | 2985.78 |
| 8 | 72.10 | 69.10 | 253.13 | 2792.80 | 2985.78 |

| Element No. | Capacity kW | Condensate kg/h | Water in °C | Water out °C |
|---|---|---|---|---|
| A | 264.06 | 273.80 | 45.00 | 48.70 |
| B | 32.56 | 0.00 | 95.00 | 85.00 |
| C | 0.00 | 0.00 | 95.00 | 85.00 |
| D | 180.96 | 0.00 | 0.00 | 0.00 |
| E | 4.42 | 0.00 | 95.00 | 85.00 |

System efficiency = 107.93

Working method 3:

Substantially the same as working method 2, but with a heat exchanger D with slightly greater efficiency.

The following is the output obtained from the heating plant:

| Pos. | °C | g/kg | kJ/kg | kg/h dry | kg/h wet |
|------|--------|--------|--------|----------|----------|
| 1 | 120.00 | 213.20 | 698.10 | 2579.87 | 3129.89 |
| 2 | 52.00 | 97.00 | 302.02 | 2579.87 | 2830.11 |
| 3 | 90.00 | 97.00 | 347.49 | 2579.87 | 2830.11 |
| 4 | 17.28 | 16.46 | 58.63 | 2579.87 | 2622.33 |
| 5 | 17.28 | 16.46 | 58.63 | 2579.87 | 2622.33 |
| 6 | 4.00 | 4.00 | 13.94 | 2792.80 | 2803.97 |
| 7 | 74.97 | 78.40 | 280.78 | 2792.80 | 3011.76 |
| 8 | 74.97 | 78.40 | 286.58 | 2792.80 | 3011.76 |

| Element No. | Capacity kW | Condensate kg/h | Water in °C | Water out °C |
|-------------|-------------|-----------------|-------------|--------------|
| A | 253.58 | 299.78 | 45.00 | 48.70 |
| B | 32.56 | 0.00 | 95.00 | 85.00 |
| C | 0.00 | 0.00 | 95.00 | 85.00 |
| D | 206.81 | 0.00 | 0.00 | 0.00 |
| E | 4.50 | 0.00 | 95.00 | 85.00 |

System efficiency = 109.11

The three working methods are all EDP simulations carried out with an approved EDP programme for thermal calculations and computation of system efficiency of plant systems of the kind shown in fig. 1 of the drawing.

**CONCLUSION**

Improvement in effect by comparison between working methods 1 and 2:

$$\frac{\text{Efficiency 2}}{\text{Efficiency 1}} = \frac{107.93}{99.60} = 1.08 \text{ corresponding to } + 8\%$$

Power consumption by comparison between working methods 1 and 3:

$$\frac{\text{Efficiency 3}}{\text{Efficiency 1}} = \frac{109.11}{99.60} = 1.09 \text{ corresponding to } + 9\%$$

Both examples thus indicate a positive improvement by use of the invention, said improvement being uncommonly great since what is involved here is a continuous improvement. In a large plant, an improvement in efficiency of a few percent results in considerable financial savings for reasons of the high fuel costs and energy taxes. In addition to the savings in fuel, the use of the invention results in a reduction in the formation of NOx and provides security against chimney condensation.

6

## Claims

1. Method for the optimization of the efficiency in a combustion plant comprising a boiler with economizer and a flue-gas system, and for the minimization of the formation of NOx in the flue gas from the combustion plant, where the heat content in the flue gas is used for the pre-heating of the combustion air for the boiler by enthalpic transfer, i.e. simultaneous transfer of both thermal energy and water vapour from the flue gas to the combustion air, **characterized** in that additional thermal energy in an amount large enough to prevent condensation is added to the flue gas before the enthalpic transfer.

2. Method according to claim 1, **characterized** in that additional thermal energy is added to the flue gas after the enthalpic transfer.

3. Method according to claim 1 or 2, **characterized** in that additional thermal energy is added to the combustion air after the enthalpic transfer.

4. Method according to any of the claims 1-3, **characterized** in that additional water vapour is added to the combustion air by the injection of water or condensate from the flue gas.

5. Plant for the optimization of the efficiency in a boiler (K) with economizer (A) and flue gas system, and for the minimization of the NOx formation in the flue gas (5) from the plant, in that the heat content of the flue gas (2,3) is used for the pre-heating of the combustion air (8) for the boiler (K) via one or more heat exchangers, and where at least one of the heat exchangers (D) is a motor-driven, rotary enthalpy heat exchanger comprising a rotor mass of a material which can both absorb and emit thermal energy and water vapour, e.g. a ceramic mass with a large number of throughgoing openings, **characterized** in that in a flue-gas pipe (2,3) in front of the first enthalpy heat exchanger (D) there is placed an apparatus (B) for the heating of the flue gas in order to prevent condensation in the enthalpic heat exchanger, preferably a water/air heat exchanger, which is supplied with boiler water from the boiler (K) or the economizer (A), or in the form of an air/air heat exchanger which is supplied with energy by the flue gas from the boiler.

6. Plant according to claim 5, **characterized** in that in a flue-gas pipe (4) after the last enthalpy heat exchanger (D) there is placed an apparatus (C) for the heating of the flue gas (4,5), e.g. in the form of a water/air heat exchanger which is supplied with boiler water from the boiler (K) or from the economiser (A), or in the form of an air/air heat exchanger which is supplied with energy by the flue gas from the boiler.

7. Plant according to claim 5 or 6, **characterized** in that in a combustion-air pipe (7,8) after the last enthalpy heat exchanger (D) there is placed an apparatus (E) for additional heating of the combustion air (8) for the boiler (K), preferably a water/air heat exchanger which is supplied with boiler water from the boiler (K) or from the economiser (A), or in the form of an air/air heat exchanger which is supplied with energy by the flue gas from the boiler.

8. Plant according to any of the claims 5-7, **characterized** in that in a combustion-air pipe (6) there is placed at least one nozzle (11) for the injection of moisture or condensate collected from the flue gas.

## Patentansprüche

1. Verfahren zur Optimierung des Wirkungsgrades in einer Verbrennungsanlage, die einen Kessel mit Ekonomiser und ein Rauchgassystem umfaßt, und zur Minimierung der Bildung von $NO_x$ in dem Rauchgas aus der Verbrennungsanlage, wobei der Wärmeinhalt in dem Rauchgas durch Enthalpieübertragung, d.h. gleichzeitige Übertragung sowohl von Wärmeenergie als auch von Wasser von dem Rauchgas auf die Verbrennungsluft, für das Vorheizen der Verbrennungsluft für den Kessel genutzt wird, **dadurch gekennzeichnet**, daß dem Rauchgas vor der Enthalpieübertragung zusätzliche Wärmeenergie in einer Menge zugeführt wird, die ausreicht, um Kondensation zu verhindern.

2. Verfahren nach Anspruch 1, **dadurch gekennzeichnet**, daß dem Rauchgas nach der Enthalpieübertragung zusätzliche Wärmeenergie zugeführt wird.

**3.** Verfahren nach Anspruch 1 oder 2, **dadurch gekennzeichnet**, daß der Verbrennungsluft nach der Enthalpieübertragung zusätzliche Wärmeenergie zugeführt wird.

**4.** Verfahren nach einem der Ansprüche 1 bis 3, **dadurch gekennzeichnet**, daß der Verbrennungsluft zusätzlicher Wasserdampf zugeführt wird, indem Wasser oder Kondensat aus dem Rauchgas eingespritzt wird.

**5.** Anlage zur Optimierung des Wirkungsgrades in einem Kessel (K) mit Ekonomiser (A) und zur Minimierung der Bildung von $NO_x$ in dem Rauchgas (5) aus der Anlage, indem der Wärmeinhalt des Rauchgases (2, 3) zum Vorheizen der Verbrennungsluft (8) für den Kessel (K) über einen oder mehrere Wärmetauscher genutzt wird, und wobei wenigstens einer der Wärmetauscher ein motorgetriebener Rotations-Enthalpie-Wärmetauscher ist, der eine Rotormasse aus einem Material umfaßt, das sowohl Wärmeenergie als auch Wasserdampf absorbieren und abgeben kann, z.B. eine keramische Masse mit einer großen Anzahl von Durchgangsöffnungen, **dadurch gekennzeichnet**, daß in einem Rauchgasrohr (2, 3) vor dem ersten Enthalpie-Wärmetauscher (D) eine Vorrichtung (B) zum Heizen des Rauchgases angeordnet ist, um Kondensation in dem Enthalpie-Wärmetauscher zu verhindern, vorzugsweise ein Wasser/Luft-Wärmetauscher, der mit Kesselwasser aus dem Kessel (K) oder dem Ekonomiser (A) gespeist wird, oder in Form einem Luft/Luft-Wärmetauschers, der durch das Rauchgas von dem Kessel mit Energie gespeist wird.

**6.** Anlage nach Anspruch 5, **dadurch gekennzeichnet**, daß in einem Rauchgasrohr (4) nach dem letzten Enthalpie-Wärmetauscher (D) eine Vorrichtung (C) zum Heizen des Rauchgases (4, 5) angeordnet ist, beispielsweise in Form eines Wasser/Luft-Wärmetauschers, der mit Kesselwasser aus dem Kessel (K) oder aus dem Ekonomiser (A) gespeist wird, oder in Form eines Luft/Luft-Wärmetauschers, der durch das Rauchgas von dem Kessel mit Energie gespeist wird.

**7.** Anlage nach Anspruch 5 oder 6, **dadurch gekennzeichnet**, daß in einem Verbrennungsluftrohr (7, 8) nach dem letzten Enthalpie-Wärmetauscher (D) eine Vorrichtung (E) zum zusätzlichen Heizen der Verbrennungsluft (8) für den Kessel (K) angeordnet ist, vorzugsweise ein Wasser/Luft-Wärmetauscher, der mit Kesselwasser aus dem Kessel (K) oder aus dem Ekonomiser (A) gespeist wird, oder in Form eines Luft/Luft-Wärmetauschers, der durch das Rauchgas von dem Kessel mit Energie gespeist wird.

**8.** Anlage nach einem der Ansprüche 5 bis 7, **dadurch gekennzeichnet**, daß in einem Verbrennungsluftrohr (6) wenigstens eine Düse (11) zum Einspritzen von Feuchtigkeit oder Kondensat angeordnet ist, die/das aus dem Rauchgas gewonnen wird.

**Revendications**

**1.** Procédé pour optimiser le rendement dans une installation de combustion comprenant une chaudière avec un économiseur et un système de gaz de combustion, et pour minimiser la formation de NOx dans les gaz de combustion provenant de l'installation de combustion, dans laquelle la teneur en chaleur des gaz de combustion est utilisée pour le pré-chauffage de l'air de combustion pour la chaudière par transfert enthalpique, c'est-à-dire transfert simultané à la fois de l'énergie thermique et de la vapeur d'eau des gaz de combustion dans l'air de combustion, caractérisé en ce qu'on ajoute aux gaz de combustion, de l'énergie thermique supplémentaire en une quantité suffisamment importante pour empêcher une condensation avant le transfert enthalpique.

**2.** Procédé suivant la revendication 1, caractérisé en ce que de l'énergie thermique supplémentaire est ajoutée aux gaz de combustion après le transfert enthalpique.

**3.** Procédé suivant les revendications 1 ou 2, caractérisé en ce que de l'énergie thermique supplémentaire est ajoutée à l'air de combustion après le transfert enthalpique.

**4.** Procédé suivant l'une quelconque des revendications 1 à 3, caractérisé en ce que de la vapeur d'eau supplémentaire est ajoutée à l'air de combustion par l'injection d'eau ou de condensat en provenance des gaz de combustion.

5. Installation pour optimiser le rendement dans une chaudière (K) avec un économiseur (A) et un système de gaz de combustion, et pour minimiser la formation de NOx dans les gaz de combustion (5) provenant de l'installation, dans laquelle la teneur en chaleur des gaz de combustion (2, 3) est utilisée pour le pré-chauffage de l'air de combustion (8) pour la chaudière (K) par l'intermédiaire d'un ou de plusieurs échangeurs de chaleur, et où au moins l'un des échangeurs de chaleur (D) est un échangeur de chaleur enthalpique rotatif entraîné par un moteur, comprenant une masse de rotor d'un matériau qui peut à la fois absorber et émettre de l'énergie thermique et de la vapeur d'eau, par exemple, une masse céramique traversée par de nombreuses ouvertures, caractérisée en ce que dans un conduit de gaz de combustion (2, 3) en face du premier échangeur de chaleur enthalpique (D), il est placé un dispositif (B) pour le chauffage des gaz de combustion afin d'empêcher une condensation dans l'échangeur de chaleur enthalpique, de préférence un échangeur de chaleur eau/air, qui est alimenté avec l'eau de chaudière provenant de la chaudière (K) ou de l'économiseur (A), ou sous la forme d'un échangeur de chaleur air/air, qui est alimenté en énergie par les gaz de combustion provenant de la chaudière.

6. Installation suivant la revendication 5, caractérisée en ce que dans un conduit (4) de gaz de combustion après le dernier échangeur (D) de chaleur enthalpique, il est placé un appareil (C) pour le chauffage des gaz de combustion (4, 5), par exemple, sous la forme d'un échangeur de chaleur eau/air, qui est alimenté avec l'eau de chaudière provenant de la chaudière (K) ou de l'économiseur (A), ou sous la forme d'un échangeur de chaleur air/air, qui est alimenté en énergie par les gaz de combustion provenant de la chaudière.

7. Installation suivant les revendications 5 ou 6, caractérisée en ce que dans un conduit (7, 8) d'air de combustion après le dernier échangeur (D) de chaleur enthalpique, il est placé un appareil (E) pour le chauffage supplémentaire de l'air de combustion (8) pour la chaudière (K), de préférence un échangeur de chaleur eau/air qui est alimenté avec l'eau de chaudière provenant de la chaudière (K) ou de l'économiseur (A), ou sous la forme d'un échangeur de chaleur air/air qui est alimenté en énergie par les gaz de combustion provenant de la chaudière.

8. Installation suivant l'une quelconque des revendications 5 à 7, caractérisée en ce que dans un conduit (6) d'air de combustion, il est placé au moins une buse (11) pour l'injection d'humidité ou de condensat collecté en provenance des gaz de combustion.

Fig.1

Fig.2

EP 0 462 921 B1

Fig. 3

Fig.4